# EUROPEAN PATENT APPLICATION

(11) **EP 4 625 144 A1**
(43) Date of publication of application: **01.10.2025**
(21) Application number: 22969566.3
(22) Date of filing: 28.12.2022
(51) Int. Cl.: G06F 8/30, H04L 12/40

(54) **CONFIGURATION METHOD AND DEVICE**

(71) Applicant: Shenzhen Yinwang Intelligent Technologies Co., Ltd., Shenzhen, Guangdong 518110 (CN)
(72) Inventor: HU, Yong, Shenzhen, Guangdong 518129 (CN); LI, Jiahong, Shenzhen, Guangdong 518129 (CN)
(74) Representative: Pfenning, Meinig & Partner mbB
(86) International application number: PCT/CN2022/142726
(87) International publication number: WO 2024/138413

(57) **Abstract**

This application provides a configuration method and apparatus. The method includes: obtaining a domain specific language DSL file, where the DSL file includes a communication relationship between a first node and a second node, and the communication relationship indicates that the first node communicates with the second node based on a first topic; and determining, based on the DSL file, an ARXML file related to communication management CM in an automotive open system architecture AUTOSAR. This application can reduce a configuration workload of a user during configuration of the ARXML file, and improve configuration efficiency.

## Description

### TECHNICAL FIELD

This application relates to the field of intelligent vehicles, and more specifically, to a configuration method and apparatus.

### BACKGROUND

An automotive electronic network is developing toward multi-bus hybrid network interconnection. In 2003, to avoid compatibility issues between vendors, the automotive industry launched the automotive open system architecture (automotive open system architecture, AUTOSAR) specification. Automotive vendors can develop their own software based on the AUTOSAR specification.

To meet more complex vehicle requirements (such as autonomous driving, internet of vehicles, and domain control), the industry defines an AUTOSAR adaptive platform (adaptive platform, AP) based on mature experience of a conventional AUTOSAR classic platform (classic platform, CP). Communication management (communication management, CM) is a key function in the AP, and determines a software architecture of the entire system and a collaboration relationship between software.

Currently, a user can only manually configure an ARXML (AUTOSAR extensible markup language, ARXML) file related to CM, namely, a configuration file, on an Artop configuration tool (which is a configuration tool officially provided by the AUTOSAR), resulting in low CM configuration efficiency.

### SUMMARY

This application provides a configuration method and apparatus, to reduce a configuration workload of a user during configuration of an ARXML file, so as to improve configuration efficiency.

According to a first aspect, this application provides a configuration method, including: obtaining a domain specific language (domain specific language, DSL) file, where the DSL file includes a communication relationship between a first node and a second node, and the communication relationship indicates that the first node communicates with the second node based on a first topic; and determining, based on the DSL file, an ARXML file related to CM in an AUTOSAR.

In this application, the ARXML file related to the CM in the AUTOSAR may be automatically generated based on the communication relationship between the first node and the second node that is included in the DSL file, without manual configuration of a user. This can reduce a configuration workload of the user, to improve configuration efficiency. In addition, the user can write the DSL file as long as the user is familiar with a communication manner similar to a robot operating system (robot operating system, ROS), to input the DSL file into a configuration tool to obtain the ARXML file related to the CM in the AUTOSAR, and does not need to be familiar with an AP. This reduces learning costs of the user during configuration. For a user who has developed a function on the ROS, costs of migrating, to the AP, the function developed based on the ROS can be reduced.

With reference to the first aspect, in some implementations of the first aspect, a data type of the first topic is a first data type, and a service interface (ServiceInterface) type corresponding to the first data type is a first service interface type; and the determining, based on the DSL file, an ARXML file related to CM in an AUTOSAR includes: determining a first service interface deployment (ServiceInterfaceDeployment) item based on the first topic; and establishing an association relationship between the first service interface deployment item and the first service interface type.

In this application, based on the information about the first topic that is in the DSL file, the first service interface deployment item may be automatically generated, and the association relationship between the first service interface deployment item and the first service interface type may be established. In this way, the user does not need to manually configure the service interface deployment item, and does not need to manually establish the association relationship between the service interface deployment item and the service interface type, thereby reducing a configuration workload of the user, to improve configuration efficiency.

In some possible implementations, a communication protocol corresponding to the first topic may be a data distribution service (data distribution service, DDS) by default, and the determining a first service interface deployment item based on the first topic includes:
determining a DDS service interface deployment (DdsServiceInterfaceDeployment) item based on the first topic.

With reference to the first aspect, in some implementations of the first aspect, the DSL file further includes information about a communication protocol corresponding to the first topic, and the determining a first service interface deployment item based on the first topic includes: determining the first service interface deployment item based on the first topic and the information about the communication protocol.

In this application, the first service interface deployment item may be automatically generated based on the first topic and the information about the communication protocol corresponding to the first topic that are in the DSL file. In this way, with reference to the information about the communication protocol, flexibility of generating the service interface deployment item can be improved.

In some possible implementations, the determining the first service interface deployment item based on the first topic and the information about the communication protocol includes: when the communication protocol is the DDS, determining the DDS service interface deployment item based on the first topic.

In some possible implementations, the determining the first service interface deployment item based on the first topic and the information about the communication protocol includes: when the communication protocol is scalable service-Oriented middleware over IP (scalable service-Oriented middleware over IP, SOME/IP), determining a SOME/IP service interface deployment (SomeIpServiceInterfaceDeployment) item based on the first topic.

With reference to the first aspect, in some implementations of the first aspect, the DSL file further includes information about one or more data types, and the one or more data types include the first data type; and before the determining a first service interface deployment item based on the first topic, the method further includes: determining, based on each data type in the one or more data types, a service interface type corresponding to the data type.

In this application, the service interface type corresponding to each of the one or more data types may be automatically determined based on the one or more data types in the DSL file. In this way, the user does not need to manually configure the service interface type, thereby reducing a configuration workload of the user, to improve configuration efficiency.

With reference to the first aspect, in some implementations of the first aspect, the first node is a publisher node, and the second node is a subscriber node; and the determining, based on the DSL file, an ARXML file related to CM in an AUTOSAR further includes: determining a first provided service instance (ProvidedServiceInstance) corresponding to the first node and a first required service instance (RequiredServiceInstance) corresponding to the second node; and establishing an association relationship between the first provided service instance, the first required service instance, and the first service interface deployment item.

In this application, the provided service instance corresponding to the first node may be automatically generated based on information about the first node that is in the DSL file, and the required service instance corresponding to the second node may be automatically generated based on information about the second node. In this way, the user does not need to manually create the provided service instance and the required service instance, and does not need to manually create the association relationship between the provided service instance, the required service instance, and the service interface deployment item, thereby reducing a configuration workload of the user, to improve configuration efficiency.

In some possible implementations, the determining a first provided service instance corresponding to the first node and a first required service instance corresponding to the second node includes: determining, based on the information about the communication protocol corresponding to the first topic, the first provided service instance corresponding to the first node and the first required service instance corresponding to the second node.

For example, when the communication protocol corresponding to the first topic is the DDS, a first DDS provided service instance (DdsProvidedServiceInstance) corresponding to the first node may be determined, and a first DDS required service instance (DdsRequiredServiceInstance) corresponding to the second node may be determined.

For another example, when the communication protocol corresponding to the first topic is SOME/IP, a first SOME/IP provided service instance (ProvidedSomeipServiceInstance) corresponding to the first node may be determined, and a first SOME/IP required service instance (RequiredSomeipServiceInstance) corresponding to the second node may be determined.

With reference to the first aspect, in some implementations of the first aspect, the communication protocol corresponding to the first topic is the DDS, the DSL file further includes first information, and the first information indicates a type of a transport plugin; and the determining, based on the DSL file, an ARXML file related to CM in an AUTOSAR further includes: determining the transport plugin based on the first information.

In this application, the transport plugin may be automatically created based on the first information in the DSL file. In this way, the user does not need to manually create the transport plugin, thereby reducing a configuration workload of the user, to improve configuration efficiency.

In some possible implementations, a type of the transport plugin includes a shared memory or a user datagram protocol (User Datagram Protocol, UDP).

With reference to the first aspect, in some implementations of the first aspect, the communication relationship further indicates that the first node communicates with a third node based on the first topic; and the determining, based on the DSL file, an ARXML file related to CM in an AUTOSAR further includes: determining a second required service instance corresponding to the third node; and establishing an association relationship between the first provided service instance, the second required service instance, and the first service interface deployment item; or determining a second provided service instance corresponding to the first node and a second required service instance corresponding to the third node; and establishing an association relationship between the second provided service instance, the second required service instance, and the first service interface deployment item.

**In** this application, when the communication relationship further indicates that the first node communicates with the third node based on the first topic, the second required service instance corresponding to the third node may be automatically generated, and the association relationship between the first provided service instance, the second required service instance, and the first service interface deployment item is established. **In** this way, in a single-transmitter and multi-receiver scenario, communication between one provided service instance and two required service instances can be implemented.

Alternatively, when the communication relationship further indicates that the first node communicates with the third node based on the first topic, the second provided service instance corresponding to the first node and the second required service instance corresponding to the third node may be automatically generated, and the association relationship between the second provided service instance, the second required service instance, and the first service interface deployment item is established. In this way, in a single-transmitter and multi-receiver scenario, a plurality of pairs of service instances may be created based on a quantity of communication links, to implement communication between a provided service instance and a required service instance in each pair of service instances.

With reference to the first aspect, in some implementations of the first aspect, the determining, based on the DSL file, an ARXML file related to CM in an AUTOSAR further includes: determining a first process (process), a first process design (ProcessDesign), a first executable (executable, exe), and a first software component (SwComponentType, swc) that are related to the first provided service instance, and establishing an association relationship between the first process and the first process design, an association relationship between the first process design and the first executable, an association relationship between the first process and the first executable, and an association relationship between the first executable and the first software component; and determining a second process, a second process design, a second executable, and a second software component that are related to the first required service instance, and establishing an association relationship between the second process and the second process design, an association relationship between the second process design and the second executable, an association relationship between the second process and the second executable, and an association relationship between the second executable and the second software component.

In this application, after the first provided service instance and the first required service instance are determined, the process, the process design, the executable, and the software component that correspond to the service instance may be further automatically determined, and the association relationship between the process and the process design, the association relationship between the process design and the executable, the association relationship between the process and the executable, and the association relationship between the executable and the software component are established. In this way, the user does not need to manually create a process, a process design, an executable, and a software component that correspond to each service instance, and does not need to manually create an association relationship between the process and the process design, an association relationship between the process design and the executable, an association relationship between the process and the executable, and an association relationship between the executable and the software component, thereby reducing a configuration workload of the user, to improve configuration efficiency.

With reference to the first aspect, in some implementations of the first aspect, the determining, based on the DSL file, an ARXML file related to CM in an AUTOSAR further includes: determining a provide port (ProvidedPortPrototype, PPort) corresponding to the first software component and a require port (RequiredPortPrototype, RPort) corresponding to the second software component; establishing an association relationship between the provide port, the require port, and the first service interface type; and determining a first mapping and a second mapping, where the first mapping is a mapping relationship between the first provided service instance and the provide port, and the second mapping is a mapping relationship between the first required service instance and the require port.

In this application, after the first software component and the second software component are determined, the provide port corresponding to the first software component and the require port corresponding to the second software component may be automatically created, the association relationship between the provide port, the require port, and the first service interface type is established, and the first mapping and the second mapping are created. In this way, the user does not need to manually configure the provide port and the require port, and does not need to manually create the association relationship between the provide port, the require port, and the first service interface type and create a service instance-to-port mapping (ServiceInstanceToPortMapping), thereby reducing a configuration workload of the user, to improve configuration efficiency.

According to a second aspect, this application provides a configuration apparatus, including an obtaining unit and a processing unit, where the obtaining unit is configured to obtain a domain specific language DSL file, the DSL file includes a communication relationship between a first node and a second node, and the communication relationship indicates that the first node communicates with the second node based on a first topic; and the processing unit is configured to determine, based on the DSL file, an ARXML file related to CM in an AUTOSAR.

With reference to the second aspect, in some implementations of the second aspect, a data type of the first topic is a first data type, and a service interface type corresponding to the first data type is a first service interface type; and the processing unit is configured to: determine a first service interface deployment item based on the first topic; and establish an association relationship between the first service interface deployment item and the first service interface type.

With reference to the second aspect, in some implementations of the second aspect, the DSL file further includes information about a communication protocol corresponding to the first topic, and the processing unit is configured to determine the first service interface deployment item based on the first topic and the information about the communication protocol.

With reference to the second aspect, in some implementations of the second aspect, the DSL file further includes information about one or more data types, and the one or more data types include the first data type; and the processing unit is further configured to: before determining the first service interface deployment item, determine, based on each data type in the one or more data types, a service interface type corresponding to the data type.

With reference to the second aspect, in some implementations of the second aspect, the first node is a publisher node, and the second node is a subscriber node; and the processing unit is further configured to: determine a first provided service instance corresponding to the first node and a first required service instance corresponding to the second node; and establish an association relationship between the first provided service instance, the first required service instance, and the first service interface deployment item.

With reference to the second aspect, in some implementations of the second aspect, the communication protocol corresponding to the first topic is DDS, the DSL file further includes first information, and the first information indicates a type of a transport plugin; and the processing unit is further configured to determine the transport plugin based on the first information.

With reference to the second aspect, in some implementations of the second aspect, the communication relationship further indicates that the first node communicates with a third node based on the first topic; and the processing unit is further configured to: determine a second required service instance corresponding to the third node; and establish an association relationship between the first provided service instance, the second required service instance, and the first service interface deployment item; or determine a second provided service instance corresponding to the first node and a second required service instance corresponding to the third node; and establish an association relationship between the second provided service instance, the second required service instance, and the first service interface deployment item.

With reference to the second aspect, in some implementations of the second aspect, the processing unit is further configured to: determine a first process, a first process design, a first executable, and a first software component that are related to the first provided service instance, and establish an association relationship between the first process and the first process design, an association relationship between the first process design and the first executable, an association relationship between the first process and the first executable, and an association relationship between the first executable and the first software component; and determine a second process, a second process design, a second executable, and a second software component that are related to the first required service instance, and establish an association relationship between the second process and the second process design, an association relationship between the second process design and the second executable, an association relationship between the second process and the second executable, and an association relationship between the second executable and the second software component.

With reference to the second aspect, in some implementations of the second aspect, the processing unit is further configured to: determine a provide port corresponding to the first software component and a require port corresponding to the second software component; establish an association relationship between the provide port, the require port, and the first service interface type; and determine a first mapping and a second mapping, where the first mapping is a mapping relationship between the first provided service instance and the provide port, and the second mapping is a mapping relationship between the first required service instance and the require port.

According to a third aspect, this application provides a configuration apparatus, including: a memory, configured to store a computer program; and a processor, configured to execute the computer program stored in the memory, for the apparatus to perform the configuration method in any one of the possible implementations of the first aspect.

According to a fourth aspect, this application provides an electronic device. The electronic device includes the configuration apparatus according to the second aspect or any one of the possible implementations of the third aspect.

According to a fifth aspect, this application provides a computer program product. The computer program product includes computer program code, and when the computer program code is run on a computer, the computer is enabled to perform the configuration method according to any one of the possible implementations of the first aspect.

It should be noted that all or some of the computer program code may be stored in a first storage medium. The first storage medium may be encapsulated together with a processor, or may be encapsulated separately from a processor.

According to a sixth aspect, this application provides a computer-readable medium. The computer-readable medium stores instructions, and when the instructions are executed by a processor, the processor is enabled to implement the configuration method according to any one of the possible implementations of the first aspect.

According to a seventh aspect, this application provides a chip. The chip includes a circuit, and the circuit is configured to perform the configuration method according to any one of the possible implementations of the first aspect.

### BRIEF DESCRIPTION OF DRAWINGS

FIG. 1 is a diagram of a software architecture of an adaptive platform of the automotive open system architecture;
FIG. 2 is a diagram of communication between a server and a client in CM;
FIG. 3 is a diagram of communication between a publisher node and a subscriber node in an ROS;
FIG. 4 is a schematic flowchart of a configuration method according to an embodiment of this application;
FIG. 5 is a diagram of a structure of a DSL file according to an embodiment of this application;
FIG. 6 is another schematic flowchart of a configuration method according to an embodiment of this application;
FIG. 7 is a diagram of associating a service interface deployment item with a service interface type corresponding to the service interface deployment item according to an embodiment of this application;
FIG. 8 is another schematic flowchart of a configuration method according to an embodiment of this application;
FIG. 9 is another schematic flowchart of a configuration method according to an embodiment of this application;
FIG. 10 is a diagram of generating a provided service instance and a required service instance according to an embodiment of this application;
FIG. 11 is a diagram of a single-transmitter and multi-receiver scenario according to an embodiment of this application;
FIG. 12 is another diagram of a single-transmitter and multi-receiver scenario according to an embodiment of this application;
FIG. 13 is a diagram of generating a process, a process design, an executable, and a software component according to an embodiment of this application;
FIG. 14 is another schematic flowchart of a configuration method according to an embodiment of this application;
FIG. 15 is a diagram of generating a service instance-to-port mapping according to an embodiment of this application;
FIG. 16 is a block diagram of a configuration apparatus according to an embodiment of this application; and
FIG. 17 is another block diagram of a configuration apparatus according to an embodiment of this application.

### DESCRIPTION OF EMBODIMENTS

The following describes technical solutions of this application with reference to accompanying drawings.

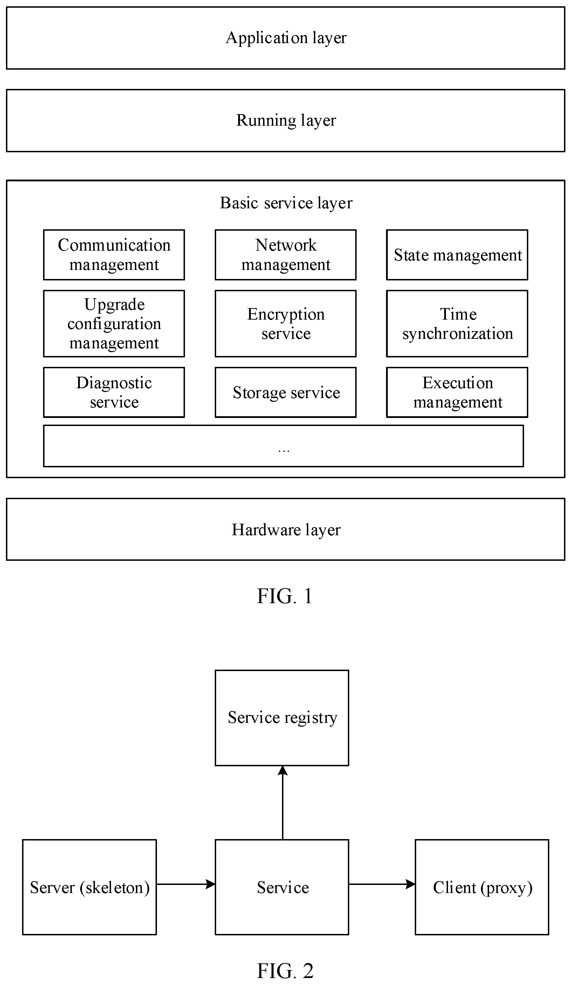

FIG. 1 is a diagram of a software architecture of an automotive open system architecture adaptive platform AUTOSAR AP. The software architecture may be divided into an application layer, a running layer, a basic service layer, and a hardware layer. The basic server layer includes communication management (communication management, CM), network management (network management), state management (state management), update configuration management (update configuration management), cryptography (cryptography), time synchronization (time synchronization), diagnostics (diagnostics), persistency (persistency), execution management (execution management), and the like. The CM, a key function in the AP, determines a software architecture of the entire system and a collaboration relationship between software.

FIG. 2 is a diagram of communication between a server (skeleton) and a client (proxy) in CM. As shown in FIG. 2, the server publishes a service (service) and registers the service in a service registry (service registry). The client subscribes, by querying the service registry, to a service requested by the client. In this way, communication between the server and the client is implemented.

Currently, a user can only manually configure an ARXML file related to CM on an Artop configuration tool. For example, when the user needs to configure one-to-one communication, more than 20 configuration items need to be manually configured, where process-related configurations include a process (process), an executable (executable, exe), a process design (ProcessDesign), a software component (swc), a port (PortPrototype, Port), a service instance (ServiceInstance), a service instance-to-port mapping (ServiceInstanceToPortMapping), a service interface (ServiceInterface), a service interface deployment (ServiceInterfaceDeployment) item, and the like, where the service instance includes a provided service instance (Provided ServiceInstance) and a required service instance (Required ServiceInstance), and the port includes a provide port (PPort) and a require port (RPort). Some common configuration items include a core type (CoreTypes). Further, in addition to a configuration property of each configuration item, the configuration item further includes a related reference relationship. Therefore, the user needs to manually configure an association relationship between process and ProcessDesign, an association relationship between ProcessDesign and exe, and an association relationship between exe and swc. As a result, CM configuration efficiency is low.

An ROS is an operating system used in a robot. A most commonly used communication manner of the ROS is a topic (topic). The topic is a point-to-point unidirectional communication manner. The "point" herein refers to a node (node), that is, information may be transmitted between nodes based on the topic.

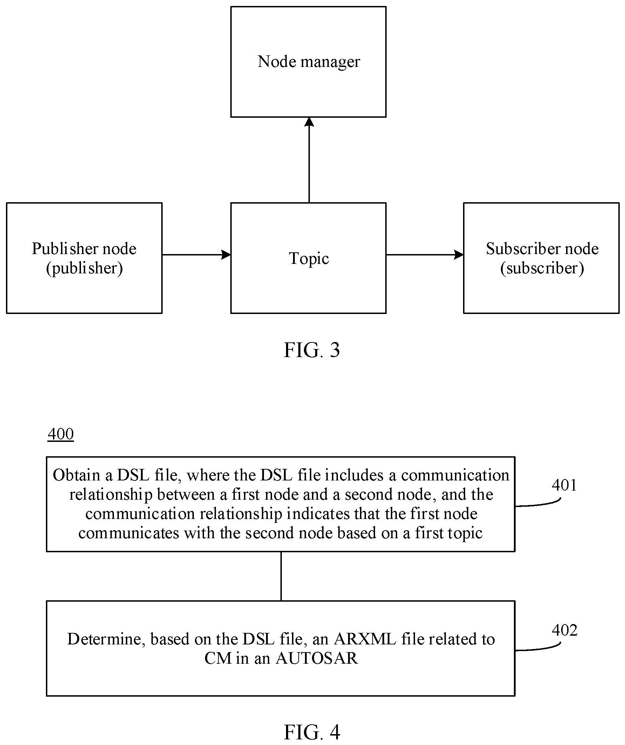

FIG. 3 is a diagram of communication between a publisher (publisher) node and a subscriber (subscriber) node in an ROS. As shown in FIG. 3, both the publisher node and the subscriber node are registered with a node manager (ROS master). After registration is completed, the publisher node may publish content related to a topic to the node manager, and the subscriber node declares, to the node manager, a topic to which the subscriber node needs to subscribe, to establish communication between the publisher node and the subscriber node.

In the robot field and the autonomous driving field, a large quantity of developers are familiar with a communication manner of message middleware in the ROS, and similar communication mechanisms are deeply applied to the Internet field. The developers are more accustomed to a framework of the message middleware and unwilling to learn the complex AP. If ROS communication needs to be migrated to the CM in the AP, the developer needs to learn the complex AP, which causes high learning costs of the developer.

The inventor of this application finds that communication of the CM in the AP is similar to topic communication in the ROS in many aspects. To be specific, in both communication of the CM in the AP and topic communication in the ROS, there is a publish and subscribe mode, and transmitted information is carried by using one medium. Based on the foregoing discovery, embodiments of this application provide a configuration method and apparatus, so that an ARXML file related to CM in the AUTOSAR can be automatically generated, without manually configuration of a user, based on a communication relationship between nodes that is included in a DSL file. In this way, a configuration workload of the user can be reduced, to improve configuration efficiency. In addition, the user only needs to be familiar with a communication manner similar to an ROS to write the DSL file, so as to input the DSL file into a configuration tool to obtain the ARXML file related to the CM in the AUTOSAR, and does not need to be familiar with the AP. In this way, the learning costs of the user in a configuration process can be reduced. For a user who has developed a function on the ROS, costs of migrating, to the AP, the function developed based on the ROS can be reduced.

FIG. 4 is a schematic flowchart of a configuration method 400 according to an embodiment of this application. The method 400 may include steps S401 and S402.

S401: Obtain a DSL file, where the DSL file includes a communication relationship between a first node and a second node, and the communication relationship indicates that the first node communicates with the second node based on a first topic.

For example, the DSL file may include a communication relationship between a publisher node 1 and a subscriber node 1, and the communication relationship indicates that the publisher node 1 communicates with the subscriber node 1 based on a topic 1 (Topic1).

The publisher node 1 may be the first node, the subscriber node 1 may be the second node, and Topic1 may be the first topic.

That the publisher node 1 communicates with the subscriber node 1 based on the topic 1 may also be understood as that the publisher node 1 publishes the topic 1 and the subscriber node 1 subscribes to the topic 1.

In an embodiment, the DSL file may further include information about a first data type corresponding to the first topic. For example, a data type 1 corresponding to the topic 1 is controller area network (controller area network, CAN) data.

In an embodiment, the DSL file may include information about a plurality of data types, and the plurality of data types include the first data type. For example, the plurality of data types include Ethernet (Ethernet, ETH) data and the CAN data.

In an embodiment, the DSL file may further include information about a communication protocol corresponding to the first topic. For example, the communication protocol includes DDS or SOME/IP.

In an embodiment, the DSL file may further include information about a machine (machine) on which the first node and the second node are deployed. For example, the publisher node 1 and the subscriber node 1 are deployed on a same machine, or the publisher node 1 and the subscriber node 1 are deployed on different machines.

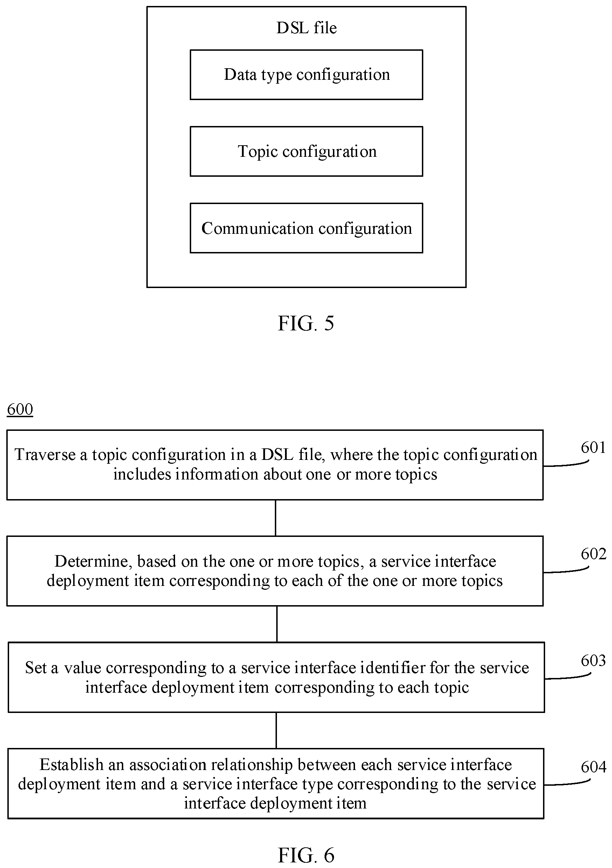

For example, FIG. 5 is a diagram of a structure of a DSL file according to an embodiment of this application. As shown in FIG. 5, the DSL file may include a data type configuration, a topic configuration, and a communication configuration. The data type configuration may include information about one or more data types that need to be used for communication. The topic configuration may include information about one or more topics and information about a data type corresponding to each of the one or more topics. The communication configuration may include information about a topic published by the publisher node and information about a topic subscribed to by the subscriber node.

The DSL file described above may be a file abstracted by a developer with reference to concepts related to an ROS and CM in an AP. After viewing a communication manner of the ROS, the developer may manually write the DSL file and input the DSL file into a configuration tool.

S402: Determine, based on the DSL file, an ARXML file related to CM in an AUTOSAR.

In an embodiment, the method 400 further includes: obtaining a data type header file, where the data type header file indicates a data type related to the AP; and determining a core type (CoreTypes) based on the data type header file.

For example, the data type header file may be a C++ data type header file.

For example, Table 1 shows a correspondence between a property and a value in configuration items related to a CAN in CoreTypes.

**Table 1**

| Property (property) | Value (value) |
|---|---|
| Category (Category) | STRUCTURE |
| Short Name (Short Name) | CAN |

It should be understood that property information of CoreTypes shown in Table 1 is not limited thereto, and may alternatively include more or less property information. The value is merely an example, and is not limited thereto.

It should be further understood that, in addition to the configuration items related to the CAN, CoreTypes may further include another configuration item. For example, CoreTypes may further include a configuration item related to the ETH.

In an embodiment, a data type of the first topic is the first data type, and a service interface type corresponding to the first data type is a first service interface type. The determining, based on the DSL file, an ARXML file related to CM in an AUTOSAR includes: determining a first service interface deployment item based on the first topic; and establishing an association relationship between the first service interface deployment item and the first service interface type.

FIG. 6 is a schematic flowchart of a configuration method 600 according to an embodiment of this application. The method 600 may be an implementation process of determining the service interface deployment item related to the CM in the AUTOSAR in S402. The method 600 may include steps S601 to S604.

S601: Traverse a topic configuration in the DSL file, where the topic configuration includes information about one or more topics, and the one or more topics include the first topic.

For example, content of the topic configuration in the DSL file is as follows:
Name: Topic1
   Datatype: DataType1
   Use_some_ip: true
Name: Topic2
   Datatype: DataType1
   Use_some_ip: false

It can be seen from the foregoing topic configuration that the topic configuration includes two topics named Topic1 and Topic2. A data type corresponding to Topic1 is DataType1, and a communication protocol corresponding to Topic1 is SOME/IP. A data type corresponding to Topic2 is DataType1, and a communication protocol corresponding to Topic2 is DDS.

S602: Determine, based on the one or more topics, a service interface deployment item corresponding to each of the one or more topics.

In an embodiment, the DSL file further includes information about a communication protocol corresponding to the first topic. The determining a first service interface deployment item based on the first topic includes: determining the first service interface deployment item based on the first topic and the information about the communication protocol.

For example, the first topic is the foregoing Topic1. In this case, SomeIpServiceInterfaceDeployment may be generated based on Topic1 and the communication protocol (SOME/IP) corresponding to Topic1.

For example, the first topic is the foregoing Topi 2. In this case, DdsServiceInterfaceDeployment may be generated based on Topic2 and the communication protocol (DDS) corresponding to Topic2.

It should be understood that the foregoing topic configuration may not include the information about the communication protocol. The configuration tool can generate DdsServiceInterfaceDeployment based on each topic, or generate SomeIpServiceInterfaceDeployment.

S603: Set a value corresponding to a service interface identifier (Service Interface Id) for the service interface deployment item corresponding to each topic.

In an embodiment, values corresponding to Service Interface Id in service interface deployment items corresponding to different topics are different, or a value corresponding to Service Interface Id may identify a corresponding topic.

For example, for SomeIpServiceInterfaceDeployment corresponding to Topic1, a value corresponding to Service Interface Id may be set to 1; and for DdsServiceInterfaceDeployment corresponding to Topic2, a value corresponding to Service Interface Id may be set to 2.

For example, Topic1 may be a camera (camera). After the value corresponding to the service interface identifier is set for SomeIpServiceInterfaceDeployment, a correspondence between a property and a value in SomeIpServiceInterfaceDeployment may be shown in Table 2.

**Table 2**

| Property | Value |
|---|---|
| Service Interface Id | 1 |
| Short Name | CameraSomeIpServiceInterfaceDeployment |
| ServiceInterface | |

It can be seen from Table 2 that, before SomeIpServiceInterfaceDeployment is associated with the service interface type, the configuration tool may set the value corresponding to Service Interface Id in SomeIpServiceInterfaceDeployment to 1 and set a value corresponding to Short Name to CameraSomeIpServiceInterfaceDeployment. In this case, the value corresponding to ServiceInterface may be null.

S604: Establish an association relationship between each service interface deployment item and a service interface type corresponding to the service interface deployment item.

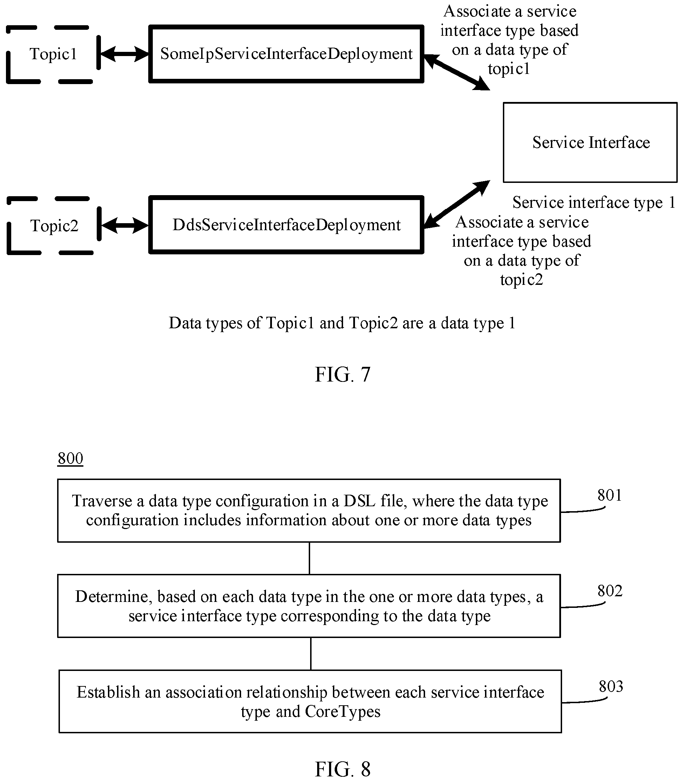

FIG. 7 is a diagram of associating a service interface deployment item with a service interface type corresponding to the service interface deployment item according to an embodiment of this application. It can be learned from content of the topic configuration that a data type corresponding to Topic1 is DataType1, and a service interface type corresponding to DataType1 is a service interface type 1 (for example, Datatype1 is the CAN, and a service interface corresponding to the service interface type 1 may be CanServiceInterface). The configuration tool can establish an association between SomeIpServiceInterfaceDeployment and the service interface type 1.

For example, after the association relationship between SomeIpServiceInterfaceDeployment and the service interface type 1 is established, a correspondence between a property and a value in SomeIpServiceInterfaceDeployment may be shown in Table 3.

**Table 3**

| Property | Value |
|---|---|
| Service Interface Id | 1 |
| Short Name | SomeIpServiceInterfaceDeployment |
| ServiceInterface | CanServiceInterface |

It can be seen from Table 3 that, after SomeIpServiceInterfaceDeployment is associated with the service interface type 1, the configuration tool may set a value corresponding to ServiceInterface to CanServiceInterface, so as to indicate that the association relationship between SomeIpServiceInterfaceDeployment and the service interface type 1 is established.

It should be understood that property information of SomeIpServiceInterfaceDeployment shown in Table 2 and Table 3 is not limited thereto, and may alternatively include more or less property information. The value is merely an example, and is not limited thereto.

The foregoing service interface types can be manually configured in the configuration tool or generated by the configuration tool based on the data type configuration in the DSL file.

In an embodiment, the DSL file further includes information about one or more data types, and the one or more data types include the first data type; and before the determining a first service interface deployment item based on the first topic, the method further includes: determining, based on each data type in the one or more data types, a service interface type corresponding to the data type.

FIG. 8 is a schematic flowchart of a configuration method 800 according to an embodiment of this application. The method 800 may be an implementation process of determining a service interface type related to the CM in the AUTOSAR in S402. The method 800 may include steps S801 to S803.

S801: Traverse the data type configuration in the DSL file, where the data type configuration includes information about one or more data types, and the one or more data types include the first data type.

For example, content of the data type configuration in the DSL file is as follows:
Name: DataType1
   Struct: CAN
Name: DataType2
   Struct: ETH

It can be seen from the foregoing data type configuration that the data type configuration includes two data types with different names: DataType1 and DataType2, where a data structure corresponding to DataType1 is the CAN, and a data structure corresponding to DataType2 is the ETH.

S802: Determine, based on each data type in the one or more data types, a service interface type corresponding to the data type.

For example, for DataType1, a service interface type 1 corresponding to DataType1 may be determined, and a type of the service interface type 1 is related to the CAN.

For example, for DataType2, a service interface type 2 corresponding to DataType2 may be determined, and a type of the service interface type 2 is related to the ETH.

S803: Establish an association relationship between each service interface type and CoreTypes.

The configuration item related to the CAN in CoreTypes shown in Table 1 is used as an example. An association relationship between the service interface type 1 and the configuration item related to the CAN may be established.

In an embodiment, the first node is a publisher node, and the second node is a subscriber node. The determining, based on the DSL file, an ARXML file related to CM in an AUTOSAR further includes: determining a first provided service instance corresponding to the first node and a first required service instance corresponding to the second node; and establishing an association relationship between the first provided service instance, the first required service instance, and the first service interface deployment item.

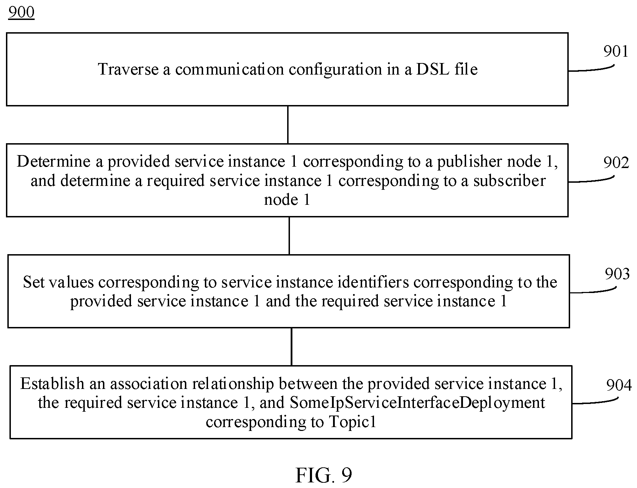

FIG. 9 is a schematic flowchart of a configuration method 900 according to an embodiment of this application. The method 900 may be an implementation process of determining the service instance related to the CM in the AUTOSAR in S402. The method 900 may include steps S901 to S904.

S901: Traverse the communication configuration in the DSL file, where the communication configuration includes a communication relationship between the publisher node 1 and the subscriber node 1, and the communication relationship indicates that the publisher node 1 communicates with the subscriber node 1 based on Topic1.

For example, content of the topic configuration in the DSL file is as follows:
Name: publisher1
   PublishTopic: Topic1
Name: subscriber1
   SubscribeTopic: Topic1

It can be seen from the foregoing communication configuration that the publisher node 1 publishes Topic1 and the subscriber node 1 subscribes to Topic1.

S902: Determine a provided service instance 1 corresponding to the publisher node 1, and determine a required service instance 1 corresponding to the subscriber node 1.

The publisher service instance 1 may be the first provided service instance, and the required service instance 1 may be the first required service instance.

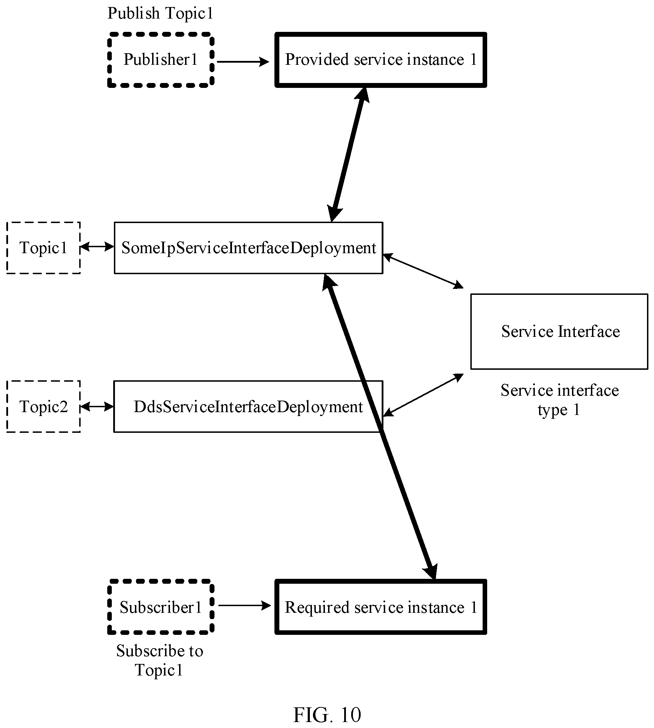

FIG. 10 is a diagram of generating a provided service instance and a required service instance according to an embodiment of this application. As shown in FIG. 10, the configuration tool may traverse nodes that publish and subscribe to a same topic in the communication configuration. When it is determined that the publisher node 1 publishes Topic1 and the subscriber node 1 subscribes to Topic1, the provided service instance 1 corresponding to the publisher node 1 may be determined, and the required service instance 1 corresponding to the subscriber node 1 may be determined.

In an embodiment, the determining a provided service instance 1 corresponding to the publisher node 1, and determining a required service instance 1 corresponding to the subscriber node 1 includes: determining, based on information about the communication protocol corresponding to Topic1, the provided service instance 1 corresponding to the publisher node 1, and the required service instance 1 corresponding to the subscriber node 1.

For example, if the communication protocol corresponding to Topic1 is SOME/IP, the provided service instance 1 may be ProvidedSomeipServiceInstance, and the required service instance 1 may be RequiredSomeipServiceInstance.

S903: Set values corresponding to service instance identifiers (ServiceInstanceId) corresponding to the provided service instance 1 and the required service instance 1.

In an embodiment, to ensure normal communication between the provided service instance 1 and the required service instance 1, the values corresponding to the service instance identifiers of the provided service instance 1 and the required service instance 1 may be set to a same value.

S904: Establish an association relationship between the provided service instance 1, the required service instance 1, and SomeIpServiceInterfaceDeployment corresponding to Topic1.

For example, Table 4 shows a correspondence between a property and a value in ProvidedSomeipServiceInstance.

**Table 4**

| Property | Value |
|---|---|
| ServiceInstanceId | 1 |
| Short Name | ProvidedSomeipServiceInstance |
| ServiceInterfaceDeployment | SomeIpServiceInterfaceDeployment |

For example, Table 5 shows a correspondence between a property and a value in RequiredSomeipServiceInstance.

**Table 5**

| Property | Value |
|---|---|
| RequiredServiceInstanceId | 1 |
| Short Name | RequiredSomeipServiceInstance |
| ServiceInterfaceDeployment | SomeIpServiceInterfaceDeployment |

It can be seen from the foregoing correspondences between properties and values shown in Table 4 and Table 5 that, an association relationship is established between each of ProvidedSomeipServiceInstance and RequiredSomeipServiceInstance and SomeIpServiceInterfaceDeployment, and ServiceInstanceId of ProvidedSomeipServiceInstance is the same as RequiredServiceInstanceId of RequiredSomeipServiceInstance.

In an embodiment, the establishing an association relationship between the provided service instance 1, the required service instance 1, and SomeIpServiceInterfaceDeployment corresponding to Topic1 may be further understood as establishing an association relationship between the service instance identifier of the provided service instance 1, the service instance identifier of the required service instance 1, and SomeIpServiceInterfaceDeployment corresponding to Topic1. For example, an association relationship between a service instance whose ServiceInstanceId is 1 and SomeIpServiceInterfaceDeployment may be established.

Because the association relationship between SomeIpServiceInterfaceDeployment and the service interface type 1 is established in the method 600, the establishing an association relationship between ProvidedSomeipServiceInstance, RequiredSomeipServiceInstance, and SomeIpServiceInterfaceDeployment may also be understood as establishing an association relationship between ProvidedSomeipServiceInstance, RequiredSomeipServiceInstance, and the service interface type 1.

In an embodiment, the communication protocol corresponding to the first topic is DDS, the DSL file further includes first information, and the first information indicates a type of a transport plugin; and the determining, based on the DSL file, an ARXML file related to CM in an AUTOSAR further includes: determining the transport plugin based on the first information.

For example, content of the topic configuration in the DSL file is as follows:
Name: publisher2
   PublishTopic: Topic2
   Transport plugins: UDP
Name: subscriber2
   SubscribeTopic: Topic2
   Transport plugins: UDP

It can be seen from the foregoing communication configuration that a publisher node 2 publishes Topic2 and a subscriber node 2 subscribes to Topic2. Because a communication protocol corresponding to Topic2 is DDS, the communication configuration may further include information about a type of a transport plugin (Transport plugins).

For example, Table 6 shows a correspondence between a property and a value in a provided service instance DdsProvidedServiceInstance that is determined based on the publisher node 2.

**Table 6**

| Property | Value |
|---|---|
| ServiceInstanceId | 3 |
| Short Name | DdsProvidedServiceInstance |
| ServiceInterfaceDeployment | DdsServiceInterfaceDeployment |
| Transport plugins | UDP |

It should be understood that the property information of the service instance shown in Table 4, Table 5, and Table 6 is not limited thereto, and may alternatively include more or less property information. The value is merely an example, and is not limited thereto.

In an embodiment, the communication relationship further indicates that the first node communicates with a third node based on the first topic. The determining, based on the DSL file, an ARXML file related to CM in an AUTOSAR further includes: determining a second required service instance corresponding to the third node; and establishing an association relationship between the first provided service instance, the second required service instance, and the first service interface deployment item.

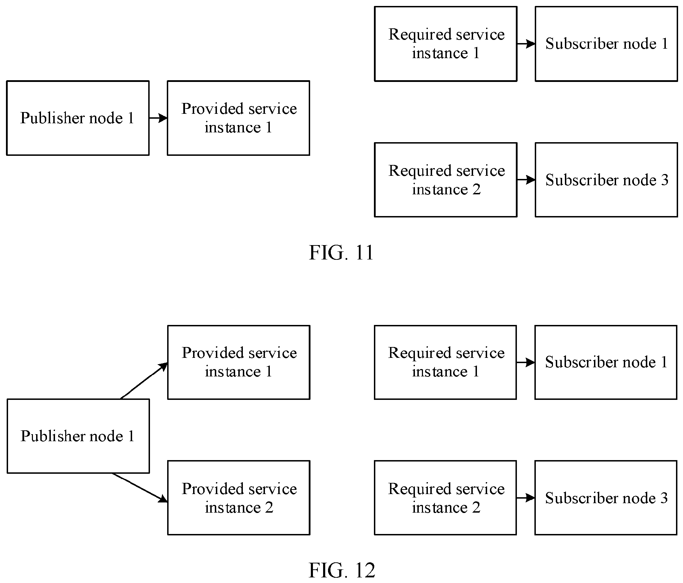

For example, FIG. 11 is a diagram of a single-transmitter and multi-receiver scenario according to an embodiment of this application. As shown in FIG. 11, the publisher node 1 publishes Topic1, and both the subscriber node 1 and a subscriber node 3 (subscriber3) subscribe to Topic1. The configuration tool may further determine a required service instance 2 corresponding to the subscriber node 3, and establish an association relationship between the provided service instance 1, the required service instance 2, and SomeIpServiceInterfaceDeployment corresponding Topic1.

The required service instance 2 may be the second required service instance.

For example, the configuration tool may set a value corresponding to a service instance identifier of the required service instance 2 to 1. In this way, both the value corresponding to the service instance identifier of the provided service instance 1 and the value corresponding to the service instance identifier of the required service instance 2 are set to 1, so that the association relationship between the provided service instance 1, the required service instance 2, and SomeIpServiceInterfaceDeployment corresponding to Topic1 can be established.

In an embodiment, the communication relationship further indicates that the first node communicates with the third node based on the first topic. The determining, based on the DSL file, an ARXML file related to CM in an AUTOSAR further includes: determining a second provided service instance corresponding to the first node and a second required service instance corresponding to the third node; and establishing an association relationship between the second provided service instance, the second required service instance, and the first service interface deployment item.

FIG. 12 is another diagram of a single-transmitter and multi-receiver scenario according to an embodiment of this application. As shown in FIG. 12, the publisher node 1 publishes Topic1, and both the subscriber node 1 and a subscriber node 3 subscribe to Topic1. The configuration tool may further determine a provided service instance 2 corresponding to the publisher node 1, determine a required service instance 2 corresponding to the subscriber node 3, and establish an association relationship between the provided service instance 2, the required service instance 2, and SomeIpServiceInterfaceDeployment corresponding to Topic1.

The provided service instance 2 may be the second provided service instance, and the required service instance 2 may be the second required service instance.

For example, the configuration tool may set a value corresponding to a service instance identifier of the provided service instance 2 and a value corresponding to a service instance identifier of the required service instance 2 to 2. In this way, both the value corresponding to the service instance identifier of the provided service instance 2 and the value corresponding to the service instance identifier of the required service instance 2 are set to 2, so that the association relationship between the provided service instance 2, the required service instance 2, and SomeIpServiceInterfaceDeployment corresponding to Topic1 can be established.

In an embodiment, the method further includes: determining a service instance to machine mapping (ServiceInstanceToMachineMapping).

For example, ServiceInstanceToMachineMapping may be generated based on whether the publisher node 1 and the subscriber node 1 are deployed on a same machine.

For example, ServiceInstanceToMachineMapping corresponding to the provided service instance 1 and the required service instance 1 may be separately generated for the provided service instance 1 and the required service instance 1. Alternatively, a plurality of service instances associated with a same communication connector (CommunicationConnector) may be combined to generate one ServiceInstanceToMachineMapping, and ServiceInstanceToMachineMapping may be associated with the plurality of service instances and the communication connector.

In an embodiment, the determining, based on the DSL file, an ARXML file related to CM in an AUTOSAR further includes: determining a first process, a first process design, a first executable, and a first software component that are related to the first provided service instance, and establishing an association relationship between the first process and the first process design, an association relationship between the first process design and the first executable, an association relationship between the first process and the first executable, and an association relationship between the first executable and the first software component; and determining a second process, a second process design, a second executable, and a second software component that are related to the first required service instance, and establishing an association relationship between the second process and the second process design, an association relationship between the second process design and the second executable, an association relationship between the second process and the second executable, and an association relationship between the second executable and the second software component.

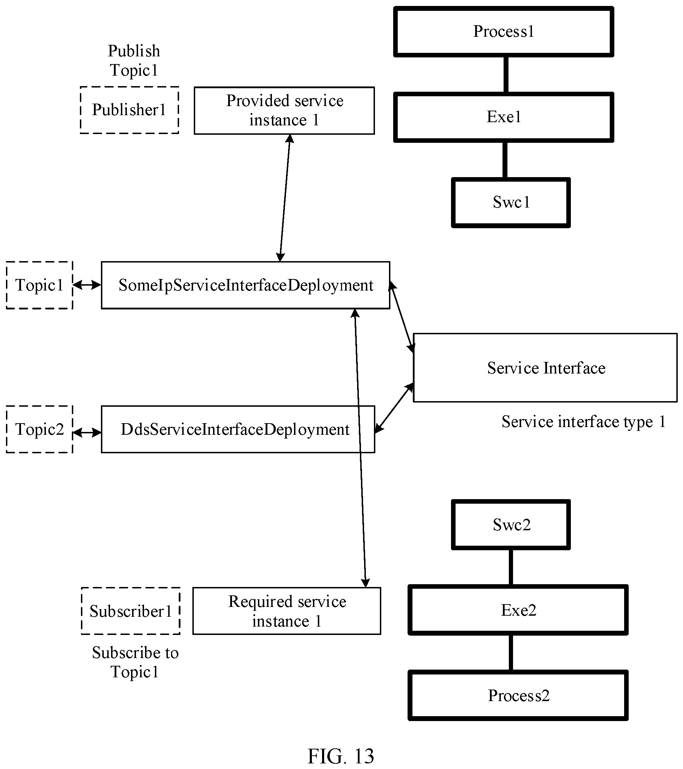

FIG. 13 is a diagram of generating a process, a process design, an executable, and a software component according to an embodiment of this application. As shown in FIG. 13, after the provided service instance 1 corresponding to the publisher node 1 is determined, a process 1 (process 1), a process design 1 (ProcessDesign 1, not shown in the figure), an executable 1 (exe1), and a software component 1 (swc1) that correspond to the provided service instance 1 may be further determined, and an association relationship between process 1 and ProcessDesign 1, an association relationship between ProcessDesign 1 and exe1, an association relationship between process 1 and exe1, and an association relationship between exe1 and swc1 are established.

Process 1 may be the first process, ProcessDesign 1 may be the first process design, exe1 may be the first executable, and swc1 may be the first software component.

Similarly, after the required service instance 1 corresponding to the subscriber node 1 is determined, a process 2 (process 2), a process design 2 (ProcessDesign 2, not shown in the figure), an executable 2 (exe2), and a software component 2 (swc2) that correspond to the required service instance 1 may be further determined, and an association relationship between process 2 and ProcessDesign 2, an association relationship between ProcessDesign 2 and exe2, an association relationship between process 2 and exe2, and an association relationship between exe2 and swc2 are established.

Process 2 may be the second process, ProcessDesign 2 may be the second process design, exe2 may be the second executable, and swc2 may be the second software component.

In an embodiment, the determining, based on the DSL file, an ARXML file related to CM in an AUTOSAR further includes: determining a provide port corresponding to the first software component and determining a require port corresponding to the second software component; establishing an association relationship between the provide port, the require port, and the first service interface type; and determining a first mapping and a second mapping, where the first mapping is a mapping relationship between the first provided service instance and the provide port, and the second mapping is a mapping relationship between the first required service instance and the require port.

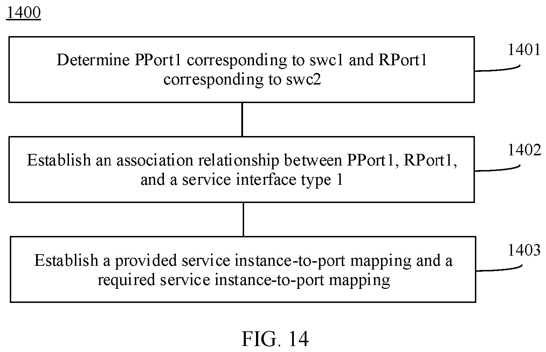

FIG. 14 is a schematic flowchart of a configuration method 1400 according to an embodiment of this application. The method 1400 may be an implementation process of determining a port related to the CM in the AUTOSAR and a service instance-to-port mapping (ServiceInstanceToPortMapping) in S402. The method 1400 may include steps S1401 to S1403.

S1401: Determine a provide port 1 (PPort1) corresponding to swc1 and a require port 1 (RPort1) corresponding to swc2.

For example, after swc1 corresponding to the provided service instance 1 is determined, PPort1 corresponding to swc1 may be further determined. After swc2 corresponding to the required service instance 1 is determined, RPort1 corresponding to swc2 may be further determined.

S1402: Establish an association relationship between PPort1, RPort1, and the service interface type 1.

The establishing the association relationship between PPort1, RPort1, and the service interface type 1 may also be understood as establishing an association relationship between PPort1, RPort1, and the service interface corresponding to the service interface type 1.

S1403: Establish a provided service instance-to-port mapping and a required service instance to-port mapping, where the provided service instance-to-port mapping is a mapping relationship between the provided service instance 1 and PPort1, and the required service instance to-port mapping is a mapping relationship between the required service instance 1 and RPort1.

The provided service instance-to-port mapping may be the first mapping, and the required service instance to-port mapping may be the second mapping.

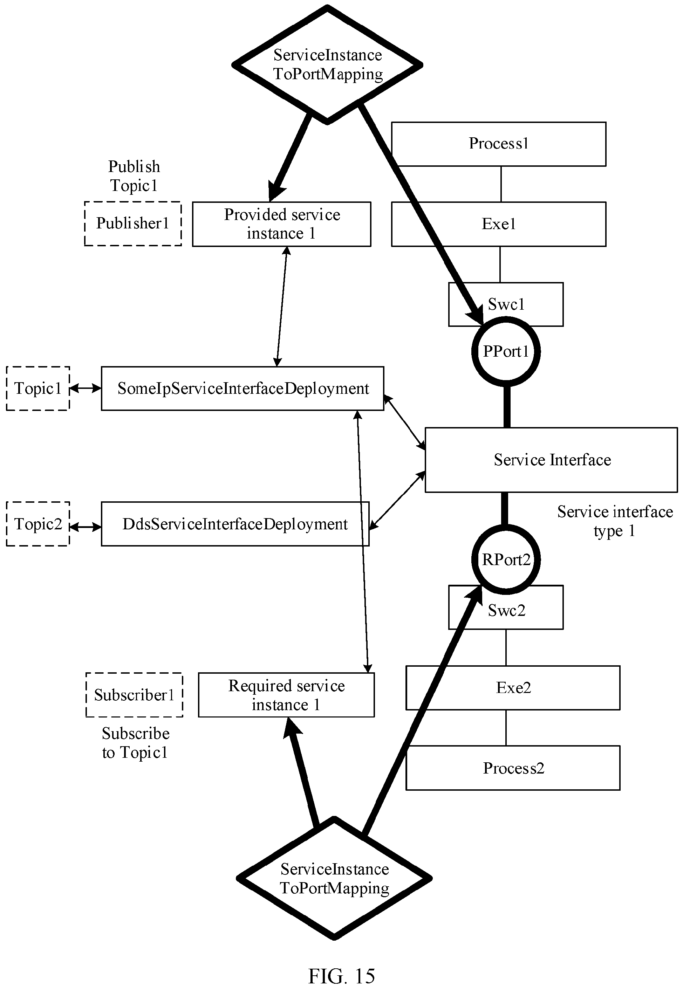

FIG. 15 is a diagram of generating a service instance-to-port mapping (ServiceInstanceToPortMapping) according to an embodiment of this application.

For example, Table 7 shows a correspondence between a property and a value in the provided service instance-to-port mapping.

**Table 7**

| Property | Value |
|---|---|
| Process | Process1 |
| Service Instance | ProvidedSomeipServiceInstance |
| Target Port Prototype | PPort1 |

For example, Table 8 shows a correspondence between a property and a value in the required service instance to-port mapping.

**Table 8**

| Property | Value |
|---|---|
| Process | Process2 |
| Service Instance | RequiredSomeipServiceInstance |
| Target Port Prototype | RPort1 |

It should be understood that property information of the service instance-to-port mapping shown in Table 7 and Table 8 is not limited thereto, and may alternatively include more or less property information. The value is merely an example, and is not limited thereto.

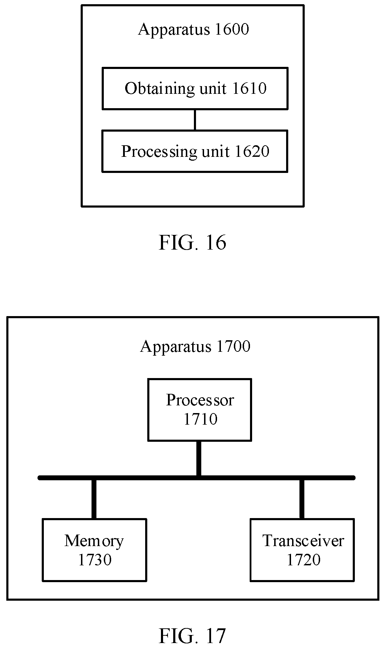

The foregoing describes in detail the configuration methods provided in embodiments of this application with reference to FIG. 1 to FIG. 15. The configuration methods in the foregoing embodiments may be executed by a configuration tool, or may be executed by a system-on-chip (system-on-chip, SoC) in a configuration tool, or may be executed by a processor in a configuration tool, or may be executed by the following configuration apparatus. The following describes in detail configuration apparatuses provided in embodiments of this application with reference to FIG. 16 and FIG. 17. It should be understood that descriptions of apparatus embodiments correspond to descriptions of method embodiment. Therefore, for content that is not described in detail, refer to the method embodiments. For brevity, details are not described herein again.

FIG. 16 is a block diagram of a configuration apparatus 1600 according to an embodiment of this application. As shown in FIG. 16, the configuration apparatus 1600 includes an obtaining unit 1610 and a processing unit 1620.

The apparatus 1600 may include units configured to perform the methods in FIG. 4, FIG. 6, FIG. 8, FIG. 9, and FIG. 14. In addition, the units in the apparatus 1600 are separately used to implement corresponding procedures in the method embodiments in FIG. 4, FIG. 6, FIG. 8, FIG. 9, and FIG. 14.

When the apparatus 1600 is configured to perform the method 400 in FIG. 4, the obtaining unit 1610 may be configured to perform S401 in the method 400, and the processing unit 1620 may be configured to perform S402 in the method 400.

For example, the obtaining unit 1610 is configured to obtain a DSL file, where the DSL file includes a communication relationship between a first node and a second node, and the communication relationship indicates that the first node communicates with the second node based on a first topic; and the processing unit 1620 is configured to determine, based on the DSL file, an ARXML file related to CM in an AUTOSAR.

Optionally, a data type of the first topic is a first data type, a service interface type corresponding to the first data type is a first service interface type, and the processing unit 1620 is configured to: determine a first service interface deployment item based on the first topic; and establish an association relationship between the first service interface deployment item and the first service interface type.

Optionally, the DSL file further includes information about a communication protocol corresponding to the first topic, and the processing unit 1620 is configured to determine the first service interface deployment item based on the first topic and the information about the communication protocol.

Optionally, the DSL file further includes information about one or more data types, and the one or more data types include the first data type; and the processing unit 1620 is further configured to: before determining the first service interface deployment item, determine, based on each data type of the one or more data types, a service interface type corresponding to the data type.

Optionally, the first node is a publisher node, the second node is a subscriber node, and the processing unit 1620 is further configured to: determine a first provided service instance corresponding to the first node and a first required service instance corresponding to the second node; and establish an association relationship between the first provided service instance, the first required service instance, and the first service interface deployment item.

Optionally, the communication protocol corresponding to the first topic is DDS, the DSL file further includes first information, and the first information indicates a type of a transport plugin; and the processing unit 1620 is further configured to determine the transport plugin based on the first information.

Optionally, the communication relationship further indicates that the first node communicates with a third node based on the first topic, and the processing unit 1620 is further configured to: determine a second required service instance corresponding to the third node, and establish an association relationship between the first provided service instance, the second required service instance, and the first service interface deployment item; or determine a second provided service instance corresponding to the first node, and a second required service instance corresponding to the third node, and establish an association relationship between the second provided service instance, the second required service instance, and the first service interface deployment item.

Optionally, the processing unit 1620 is further configured to: determine a first process, a first process design, a first executable, and a first software component that are related to the first provided service instance, and establish an association relationship between the first process and the first process design, an association relationship between the first process design and the first executable, an association relationship between the first process and the first executable, and an association relationship between the first executable and the first software component; and determine a second process, a second process design, a second executable, and a second software component that are related to the first required service instance, and establish an association relationship between the second process and the second process design, an association relationship between the second process design and the second executable, an association relationship between the second process and the second executable, and an association relationship between the second executable and the second software component.

Optionally, the processing unit 1620 is further configured to: determine a provide port corresponding to the first software component and a require port corresponding to the second software component; establish an association relationship between the provide port, the require port, and the first service interface type; and determine a first mapping and a second mapping, where the first mapping is a mapping relationship between the first provided service instance and the provide port, and the second mapping is a mapping relationship between the first required service instance and the require port.

It should be understood that unit division of the foregoing apparatus is merely logical function division. During actual implementation, all or some of the units may be integrated into one physical entity, or may be physically separated.

FIG. 17 is a block diagram of a configuration apparatus 1700 according to an embodiment of this application. The configuration apparatus 1700 shown in FIG. 17 may include a processor 1710, a transceiver 1720, and a memory 1730. The processor 1710, the transceiver 1720, and the memory 1730 are connected through an internal connection path. The memory 1730 is configured to store instructions. The processor 1710 is configured to execute the instructions stored in the memory 1730, so that the transceiver 1720 receives/sends data. Optionally, the memory 1730 may be coupled to the processor 1710 through an interface, or may be integrated with the processor 1710.

It should be noted that the transceiver 1720 may include but is not limited to a transceiver apparatus, for example, an input/output interface (input/output interface), to implement communication between the apparatus 1700 and another device or a communication network.

The memory 1730 may be a read-only memory (read-only memory, ROM), a static storage device, a dynamic storage device, or a random access memory (random access memory, RAM).

In an implementation, the processor 1710 may be a circuit having an instruction reading and running capability, for example, a central processing unit (central processing unit, CPU), a microprocessor, or a digital signal processor (digital signal processor, DSP). In another implementation, the processor 1710 may implement a specific function by using a logical relationship of a hardware circuit, and the logical relationship of the hardware circuit is fixed or reconfigurable. For example, the processor 1710 may be a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the units.

An embodiment of this application further provides an electronic device. The electronic device may include the foregoing configuration apparatus 1600 or the foregoing configuration apparatus 1700.

An embodiment of this application further provides a computer program product. The computer program product includes computer program code, and when the computer program code is run on a computer, the computer is enabled to perform the configuration method in the foregoing embodiments.

An embodiment of this application further provides a computer-readable medium. The computer-readable medium stores program code, and when the computer program code is run on a computer, the computer is enabled to perform the configuration method in the foregoing embodiments.

An embodiment of this application further provides a chip, including a circuit, configured to perform the configuration method in the foregoing embodiments.

In an implementation process, steps in the foregoing methods can be implemented by using a hardware integrated logical circuit in the processor, or by using instructions in a form of software. The method of the communication disclosed with reference to embodiments of this application may be directly performed by a hardware processor, or may be performed by using a combination of hardware in the processor and a software module. The software module may be located in a mature storage medium in the art like a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium and includes several instructions for instructing a computing device (which may be a personal computer, a server, a network device, or the like) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A configuration method, comprising:
obtaining a domain specific language DSL file, wherein the DSL file comprises a communication relationship between a first node and a second node, and the communication relationship indicates that the first node communicates with the second node based on a first topic; and
determining, based on the DSL file, an ARXML file related to communication management CM in an automotive open system architecture AUTOSAR.

2. The method according to claim 1, wherein a data type of the first topic is a first data type, and a service interface type corresponding to the first data type is a first service interface type; and
the determining, based on the DSL file, an ARXML file related to CM in an AUTOSAR comprises:
determining a first service interface deployment item based on the first topic; and
establishing an association relationship between the first service interface deployment item and the first service interface type.

3. The method according to claim 2, wherein the DSL file further comprises information about a communication protocol corresponding to the first topic; and
the determining a first service interface deployment item based on the first topic comprises:
determining the first service interface deployment item based on the first topic and the information about the communication protocol.

4. The method according to claim 2 or 3, wherein the DSL file further comprises information about one or more data types, and the one or more data types comprise the first data type; and before the determining a first service interface deployment item based on the first topic, the method further comprises:
determining, based on each data type in the one or more data types, a service interface type corresponding to the data type.

5. The method according to claim 4, wherein the first node is a publisher node, and the second node is a subscriber node; and
the determining, based on the DSL file, an ARXML file related to CM in an AUTOSAR further comprises:
determining a first provided service instance corresponding to the first node and a first required service instance corresponding to the second node; and
establishing an association relationship between the first provided service instance, the first required service instance, and the first service interface deployment item.

6. The method according to claim 5, wherein the communication protocol corresponding to the first topic is a data distribution service DDS, the DSL file further comprises first information, and the first information indicates a type of a transport plugin; and
the determining, based on the DSL file, an ARXML file related to CM in an AUTOSAR further comprises:
determining the transport plugin based on the first information.

7. The method according to claim 5 or 6, wherein the communication relationship further indicates that the first node communicates with a third node based on the first topic; and
the determining, based on the DSL file, an ARXML file related to CM in an AUTOSAR further comprises:
determining a second required service instance corresponding to the third node; and
establishing an association relationship between the first provided service instance, the second required service instance, and the first service interface deployment item; or
determining a second provided service instance corresponding to the first node and a second required service instance corresponding to the third node; and
establishing an association relationship between the second provided service instance, the second required service instance, and the first service interface deployment item.

8. The method according to any one of claims 5 to 7, wherein the determining, based on the DSL file, an ARXML file related to CM in an AUTOSAR further comprises:
determining a first process, a first process design, a first executable, and a first software component that are related to the first provided service instance, and establishing an association relationship between the first process and the first process design, an association relationship between the first process design and the first executable, an association relationship between the first process and the first executable, and an association relationship between the first executable and the first software component; and
determining a second process, a second process design, a second executable, and a second software component that are related to the first required service instance, and establishing an association relationship between the second process and the second process design, an association relationship between the second process design and the second executable, an association relationship between the second process and the second executable, and an association relationship between the second executable and the second software component.

9. The method according to claim 8, wherein the determining, based on the DSL file, an ARXML file related to CM in an AUTOSAR further comprises:
determining a provide port corresponding to the first software component and a require port corresponding to the second software component;
establishing an association relationship between the provide port, the require port, and the first service interface type; and
determining a first mapping and a second mapping, wherein the first mapping is a mapping relationship between the first provided service instance and the provide port, and the second mapping is a mapping relationship between the first required service instance and the require port.

10. A configuration apparatus, comprising an obtaining unit and a processing unit, wherein
the obtaining unit is configured to: obtain a domain specific language DSL file, wherein the DSL file comprises a communication relationship between a first node and a second node, and the communication relationship indicates that the first node communicates with the second node based on a first topic; and
the processing unit is configured to: determine, based on the DSL file, an ARXML file related to communication management CM in an automotive open system architecture AUTOSAR.

11. The apparatus according to claim 10, wherein a data type of the first topic is a first data type, and a service interface type corresponding to the first data type is a first service interface type; and the processing unit is configured to:
determine a first service interface deployment item based on the first topic; and
establish an association relationship between the first service interface deployment item and the first service interface type.

12. The apparatus according to claim 11, wherein the DSL file further comprises information about a communication protocol corresponding to the first topic; and the processing unit is configured to:
determine the first service interface deployment item based on the first topic and the information about the communication protocol.

13. The apparatus according to claim 11 or 12, wherein the DSL file further comprises information about one or more data types, and the one or more data types comprise the first data type; and the processing unit is further configured to:
before determining the first service interface deployment item, determine, based on each data type in the one or more data types, a service interface type corresponding to the data type.

14. The apparatus according to claim 13, wherein the first node is a publisher node, and the second node is a subscriber node; and the processing unit is further configured to:
determine a first provided service instance corresponding to the first node and a first required service instance corresponding to the second node; and
establish an association relationship between the first provided service instance, the first required service instance, and the first service interface deployment item.

15. The apparatus according to claim 14, wherein the communication protocol corresponding to the first topic is DDS, the DSL file further comprises first information, and the first information indicates a type of a transport plugin; and the processing unit is further configured to:
determine the transport plugin based on the first information.

16. The apparatus according to claim 14 or 15, wherein the communication relationship further indicates that the first node communicates with a third node based on the first topic; and the processing unit is further configured to:
determine a second required service instance corresponding to the third node; and establish an association relationship between the first provided service instance, the second required service instance, and the first service interface deployment item; or
determine a second provided service instance corresponding to the first node and a second required service instance corresponding to the third node; and establish an association relationship between the second provided service instance, the second required service instance, and the first service interface deployment item.

17. The apparatus according to any one of claims 14 to 16, wherein the processing unit is further configured to:
determine a first process, a first process design, a first executable, and a first software component that are related to the first provided service instance, and establish an association relationship between the first process and the first process design, an association relationship between the first process design and the first executable, an association relationship between the first process and the first executable, and an association relationship between the first executable and the first software component; and
determine a second process, a second process design, a second executable, and a second software component that are related to the first required service instance, and establish an association relationship between the second process and the second process design, an association relationship between the second process design and the second executable, an association relationship between the second process and the second executable, and an association relationship between the second executable and the second software component.

18. The apparatus according to claim 17, wherein the processing unit is further configured to:
determine a provide port corresponding to the first software component and a require port corresponding to the second software component;
establish an association relationship between the provide port, the require port, and the first service interface type; and
determine a first mapping and a second mapping, wherein the first mapping is a mapping relationship between the first provided service instance and the provide port, and the second mapping is a mapping relationship between the first required service instance and the require port.

19. A configuration apparatus, comprising:
a memory, configured to store a computer program; and
a processor, configured to execute the computer program stored in the memory, for the apparatus to perform the configuration method according to any one of claims 1 to 9.

20. An electronic device, comprising the configuration apparatus according to any one of claims 10 to 19.

21. A computer-readable storage medium, wherein the computer-readable storage medium stores instructions, and when the instructions are executed by a processor, the processor implements the configuration method according to any one of claims 1 to 9.

22. A chip, wherein the chip comprises a circuit, and the circuit is configured to perform the configuration method according to any one of claims 1 to 9.

23. A computer program product, wherein the computer program product comprises computer program code, and when the computer program code is run on a computer, the computer performs the configuration method according to any one of claims 1 to 9.
